# EUROPÄISCHE PATENTSCHRIFT

(11) **EP 3 819 517 B1**
(45) Veröffentlichungstag und Bekanntmachung des Hinweises auf die Patenterteilung: **03.04.2024**
(21) Anmeldenummer: 20206375.6
(22) Anmeldetag: 09.11.2020
(51) Int. Cl.: F16D 3/60

(54) **ELASTISCHE KUPPLUNG**
ELASTIC COUPLING
ACCOUPLEMENT ÉLASTIQUE

(30) Priorität: 10.11.2019 DE 102019130272
(43) Veröffentlichungstag der Anmeldung: 12.05.2021
(73) Patentinhaber: BOGE Elastmetall GmbH, 49401 Damme (DE)
(72) Erfinder:
(74) Vertreter: Bossmeyer, Jörg Peter

(56) Entgegenhaltungen:
- DE-A1-102008 026 763
- DE-U1- 29 915 624
- DE-U1-202015 003 886

## Beschreibung

Die Erfindung betrifft eine Wellenverbindung nach dem Oberbegriff des unabhängigen Anspruchs.

Immer größere Leistungen bei Verbrennungsmotoren mit einhergehender Optimierung der Drehmomentkurve sowie parallel geschaltete Elektromotoren führen zu immer höheren Drehmomentanforderungen an die beteiligten Bauteile (z.B. Getriebe, Verzahnungen, Kupplungen etc.). Dem gegenläufig sind die immer kleiner werdenden Bauräume, die den Komponenten zugestanden werden. Den dadurch in doppelter Hinsicht ansteigenden spezifischen Leistungsanforderungen an die kraftübertragenden Bauteile wurde durch den Einsatz veränderter oder neuer Materialien oder durch komplexe konstruktive Änderungen begegnet. Im Fall der fadenarmierten elastischen nicht schaltbaren Kupplungen wurde von der normalen Rohrarmierung über hochfestere Rohre hin zu Rohren mit Bund gegangen, um der Verschraubungsbelastung bzw. der Rohrbelastung im Verschraubungspunkt zu begegnen bzw. die spezifische Belastung zu minimieren. Der Stand der Technik führt aufgrund der konstruktiven Ausgestaltung aber zu einer axial größer bauenden Kupplung, da der Bund über die Kupplung hinausragt. Der Bund selbst hat neben der größeren Auflagefläche noch den äußeren Passungsbereich, der zur weiteren Betriebsfestigkeit in den Flansch (Senkloch) eintaucht. Durch diese Konstruktion vergrößert sich aber der Hebelarm zwischen Krafteinleitungspunkt und Aufstandsfläche des Rohrs, sodass ein Teil des gewünschten Effekts wieder vergeben wird. Zusätzlich sieht der Stand der Technik bei Rohren mit Bund aus Montagegründen ein zweites Rohr vor, wobei die Rohre ineinander angeordnet sind (Rohr in Rohr Lösung). Im Weiteren sind zur Fadenpaketführung im Inneren der Kupplung Scheiben (auch Kragenhülsen oder Bundbuchsen genannt) vorgesehen. Es besteht insbesondere der Wunsch, die spezifische Belastung im Verschraubungspunkt zu minimieren, einen Passungsbereich zur Betriebsfestigkeitssteigerung innerhalb des Kupplungskörpers zu schaffen und im Weiteren die Menge der Bauteile zu verringern.

Die DE 10 2008 026 763 A1 beschreibt einen elastischen Gelenkkörper für eine Wellenanordnung zum gelenkigen Verbinden zweier Wellenabschnitte mit einer Mehrzahl von Buchsen, die in Umfangsrichtung in vorbestimmten Winkelabständen bezüglich einer Mittelachse des Gelenkkörpers angeordnet sind, einer Mehrzahl von Schlingenpaketen, wobei jedes Schlingenpaket jeweils zwei benachbarte Buchsen umschlingt, und einer gummielastischen Ummantelung, in die die Schlingenpakete und die Buchsen zumindest teilweise eingebettet sind, wobei an wenigstens einem Endbereich wenigstens einer der Buchsen zur axialen Abstützung eines angrenzenden Schlingenpakets ein um die Buchse umlaufender, zumindest teilweise in die gummielastische Ummantelung eingebetteter Bund vorgesehen ist, der im achsenthaltenden Schnitt betrachtet einen U-förmigen Querschnitt aufweist, wobei der Querschnitt mit zwei U-Längsschenkeln und einem U-Querschenkel ausgebildet ist, wobei der Bund mit einem U-Längsschenkel an der Buchse anliegt.

Die DE 20 2015 003 886 U1 offenbart einen elastischen Gelenkkörper mit einer Mehrzahl von Kopplungselementen, wenigstens einem Fadenpaket, welches wenigstens zwei Kopplungselemente drehmomentübertragend koppelt, einer zur axialen Führung des wenigstens einen Fadenpakets an wenigstens einem Kopplungselement vorgesehenen Stützeinrichtung und wenigstens einem elastischen Körper, in den zumindest die Kopplungselemente, das wenigstens eine Fadenpakt und die Stützeinrichtung zumindest teilweise eingebettet sind, wobei die Stützeinrichtung wenigstens ein an wenigstens einem der Kopplungselemente integral ausgebildetes Bundelement und wenigstens ein entlang der Achse des wenigstens einen Kopplungselements verlagerbares Bundelement umfasst.

Nachteilig ist, dass derartige Gelenkkörper vor Ablauf der vorgesehenen Laufleistung ausfallen. Neben der zerstörten Kupplung führt die unzureichende Standfestigkeit der Verschraubung zum Bruch derselben und zum Ausfall im Fahrbetrieb. Eine Notfalllösung wäre durch den Einsatz einer größeren Kupplung mit den damit verbundenen Folgen für alle benachbarten Bauteile und eventuell bereits verplanten Bauräume gegeben.

Ausgehend hiervon liegt der Erfindung insbesondere die Aufgabe zugrunde bei einer elastischen Kupplung einer Wellenverbindung mit möglichst wenig Bauraumzunahme die Lebensdauer erhöhen zu können.

Diese Aufgabe wird erfindungsgemäß durch eine Wellenverbindung nach Anspruch 1 gelöst. Bevorzugte Weiterbildungen der Erfindung sind in den Unteransprüchen und in der nachfolgenden Beschreibung gegeben.

Die Erfindung betrifft eine Wellenverbindung mit einer ersten Welle, die an einem Ende einen ersten Wellenflansch aufweist, und einer zweiten Welle, die an einem dem ersten Wellenflansch zugewandten Ende einen zweiten Wellenflansch aufweist, wobei eine elastische Kupplung zwischen den Wellenflanschen angeordnet ist, die mit oder jeweils mit der elastischen Kupplung, vorzugsweise durch Befestigungsmittel, fest verbunden und/oder verschraubt sind. Die elastische Kupplung weist mehrere, sich jeweils in einer axialen Richtung erstreckende Rohre, die rings einer in axialer Richtung verlaufenden Kupplungsmittelachse im Abstand zueinander angeordnet sind, wenigstens ein Fadenpaket, mittels welchem die Rohre, insbesondere drehmomentübertragend, miteinander gekoppelt sind, und einen oder wenigstens einen die Rohre umfangsseitig, insbesondere zumindest teilweise, umschließenden Elastomerkörper auf, in den das wenigstens eine Fadenpaket, insbesondere zumindest teilweise, eingebettet ist, wobei wenigstens eines oder jedes der Rohre zwei oder wenigstens zwei oder genau zwei in axialer Richtung aufeinander folgende Rohrabschnitte aufweist, von denen einer einen Hauptabschnitt und ein anderer einen integral mit diesem ausgebildeten Endabschnitt bildet, der einen größeren Innendurchmesser als der Hauptabschnitt aufweist, dessen dem Endabschnitt zugewandte Stirnseite eine quer zur axialen Richtung ausgerichtete, ringförmige Anlagefläche bildet. Dabei ist durch die Anlagefläche des wenigstens einen oder jedes Rohrs zusammen mit einer Innenumfangsfläche des Endabschnitts des wenigstens einen oder des jeweiligen Rohrs ein oder jeweils ein, vorzugsweise zylindrischer, Aufnahmeraum definiert, der z.B. auch als Passungsbereich bezeichnet wird. Erfindungsgemäß weist wenigstens einer der Wellenflansche wenigstens einen axialen Flanschvorsprung auf, der in den wenigstens einen Aufnahmeraum oder in wenigstens einen der Aufnahmeräume eingreift.

Ein Flansch oder Wellenflansch, mit dem oder mittels welchem die elastische Kupplung an einer Welle befestigt ist, ist mit wenigstens einem axialen Flanschvorsprung versehen, der in den Endabschnitt des wenigstens einen Rohrs oder wenigstens eines der Rohre eintaucht oder eingebracht oder einbringbar ist und vorzugsweise an dessen Anlagefläche axial anliegt oder anlegbar ist. Daher kann bei gleicher oder näherungsweise gleicher axialer Länge des wenigstens einen Rohrs wie im Stand der Technik die Anlagefläche weiter in Richtung der axialen Mitte des wenigstens einen Rohrs verlagert werden, sodass eine in das wenigstens eine Rohr über die Anlagefläche und/oder über den Endabschnitt eingebrachte Belastung aufgrund der geringeren Hebellänge bis zur axialen Mitte des Rohrs und/oder des Krafteinleitungsbereichs zu einem geringeren Drehmoment führt als im Stand der Technik. Somit kann die Belastung der elastischen Kupplung reduziert und deren Lebensdauer erhöht werden.

Das wenigsten eine oder jedes Rohr und/oder der Endabschnitt des wenigstens einen oder jedes Rohrs und/oder der Hauptabschnitt des wenigstens einen oder jedes Rohrs liegt bevorzugt in oder innerhalb der elastischen Kupplung und/oder in dem Elastomerkörper oder innerhalb des Elastomerkörpers und/oder ist bevorzugt in oder innerhalb der elastischen Kupplung und/oder in dem Elastomerkörper oder innerhalb des Elastomerkörpers vorgesehen.

Der Aufnahmeraum oder Passungsbereich des wenigstens einen oder jedes Rohrs dient bevorzugt zur Befestigung der elastischen Kupplung an wenigstens einem Flansch. Der Aufnahmeraum oder Passungsbereich des wenigstens einen oder jedes Rohrs liegt insbesondere in oder innerhalb der elastischen Kupplung und/oder in dem Elastomerkörper oder innerhalb des Elastomerkörpers und/oder ist insbesondere in oder innerhalb der elastischen Kupplung und/oder in dem Elastomerkörper oder innerhalb des Elastomerkörpers vorgesehen. Vorteilhaft ist in den Aufnahmeraum des wenigstens einen Rohrs oder jedes Rohrs oder jedes Rohrs von mehreren der Rohre ein oder jeweils ein, insbesondere axialer, Flanschvorsprung eines Flansches einbringbar, mit welchem das wenigstens eine oder das jeweilige Rohr und/oder die elastische Kupplung, vorzugsweise fest und/oder starr oder drehstarr, verbindbar ist. Bevorzugt ist der Flansch, insbesondere fest und/oder starr oder drehstarr, mit einer Welle verbunden. Beispielsweise sind in die Aufnahmeräume der Rohre Flanschvorsprünge von Flanschen einbringbar, mit welchen die elastische Kupplung, insbesondere jeweils, vorzugsweise fest und/oder starr oder drehstarr, verbindbar ist. Bevorzugt ist der oder jeder Flansch, insbesondere fest und/oder starr oder drehstarr, mit einer oder jeweils einer Welle verbunden. Der oder jeder Flansch ist oder bildet insbesondere einen oder jeweils einen Wellenflansch. Vorzugsweise steht der oder jeder Flanschvorsprung axial von dem oder dem jeweiligen Flansch vor. Vorteilhaft erstreckt sich der oder jeder Flansch oder Wellenflansch in radialer Richtung. Beispielsweise weist der oder jeder Flansch mehrere, insbesondere drei Flanscharme auf, die rings einer Flanschmittelachse, vorzugsweise gleichmäßig verteilt, angeordnet sind. Alternativ ist der oder jeder Flansch z.B. scheibenförmig. Die Flanschmittelachse des oder jedes Flansches erstreckt sich insbesondere in axialer Richtung und/oder fällt z.B. mit der Kupplungsmittelachse zusammen.

Der Aufnahmeraum oder Passungsbereich des wenigstens einen oder jedes Rohrs bildet insbesondere einen Rohrinnenraum des Endabschnitts des wenigstens einen oder des jeweiligen Rohrs. Ein Rohrinnenraum des Hauptabschnitts des wenigstens einen oder jedes Rohrs geht insbesondere axial in den Aufnahmeraum oder Passungsbereich des wenigstens einen oder des jeweiligen Rohrs über. Insbesondere weist der Aufnahmeraum oder Passungsbereich des wenigstens einen oder jedes Rohrs einen größeren Durchmesser als der oder ein Rohrinnenraum des Hauptabschnitts des wenigstens einen oder des jeweiligen Rohrs auf. Der oder ein Rohrinnenraum des Hauptabschnitts des wenigstens einen oder jedes Rohrs liegt vorzugsweise in oder innerhalb der elastischen Kupplung und/oder in dem Elastomerkörper oder innerhalb des Elastomerkörpers und/oder ist vorzugsweise in oder innerhalb der elastischen Kupplung und/oder in dem Elastomerkörper oder innerhalb des Elastomerkörpers vorgesehen. Bevorzugt ist der Rohrinnenraum des Hauptabschnitts zylindrisch.

Die Innenumfangsfläche des Endabschnitts des wenigstens einen oder jedes Rohrs ist vorzugsweise rund oder kreisrund. Alternativ ist die Innenumfangsfläche des Endabschnitts des wenigstens einen oder jedes Rohrs z.B. oval oder unrund ausgebildet. Hierdurch ist insbesondere eine Verdrehsicherung gebildet oder bildbar. Beispielsweise weist die Innenumfangsfläche des Endabschnitts des wenigstens einen oder jedes Rohrs einen oder mehrere unrunde oder gerade Abschnitte auf. Insbesondere sind an der Innenumfangsfläche des Endabschnitts des wenigstens einen oder jedes Rohrs ein oder mehrere Mitnehmer, z.B. in Form von unrunden oder geraden Abschnitten und/oder in Form von Zähnen oder keilförmigen Vorsprüngen vorgesehen.

Die Anlagefläche des wenigstens einen oder jedes Rohrs ist vorzugsweise eben. Bevorzugt ist die Anlagefläche des wenigstens einen oder jedes Rohrs ringscheibenförmig. Vorteilhaft ist die Anlagefläche des wenigstens einen oder jedes Rohrs rotationssymmetrisch oder im Wesentlichen rotationssymmetrisch.

Dem wenigstens einen oder jedem Rohr ist insbesondere eine oder jeweils eine in axialer Richtung verlaufende Rohrlängsachse zugeordnet. Bevorzugt ist das wenigstens eine oder jedes Rohr, insbesondere zu der oder der jeweiligen Rohrlängsachse, rotationssymmetrisch oder im Wesentlichen rotationssymmetrisch. Vorzugsweise ist der Hauptabschnitt des wenigstens einen oder jedes Rohrs zylindrisch oder hohlzylindrisch. Vorteilhaft ist der Endabschnitt des wenigstens einen oder jedes Rohrs zylindrisch oder hohlzylindrisch. Bevorzugt bildet ein dem Hauptabschnitt des wenigstens einen oder jedes Rohrs abgewandtes axiales Ende des Endabschnitts des wenigstens einen oder des jeweiligen Rohrs ein, insbesondere erstes, axiales Ende des wenigstens einen oder des jeweiligen Rohrs. Vorzugsweise bildet ein dem Endabschnitt des wenigstens einen oder jedes Rohrs abgewandtes axiales Ende des Hauptabschnitts des wenigstens einen oder des jeweiligen Rohrs ein, insbesondere anderes oder zweites, axiales Ende des wenigstens einen oder des jeweiligen Rohrs.

Eine oder jedwede quer zur axialen Richtung und/oder quer zur Kupplungsmittelachse und/oder quer zu der oder jeder Rohrlängsachse verlaufende Richtung wird insbesondere als radiale Richtung bezeichnet.

Eine um die Kupplungsmittelachse herum verlaufende Richtung wird insbesondere als Umfangsrichtung der Kupplung oder als Kupplungsumfangsrichtung bezeichnet. Eine um die Rohrlängsachse oder um eine der Rohrlängsachsen herum verlaufende Richtung wird insbesondere als Umfangsrichtung des oder des jeweiligen Rohrs oder als Rohrumfangsrichtung bezeichnet.

Bevorzugt ist die axiale Länge des Endabschnitts des wenigstens einen oder jedes Rohrs kleiner als die axiale Länge des Hauptabschnitts des wenigstens einen oder des jeweiligen Rohrs. Beispielsweise ist die axiale Länge des Endabschnitts des wenigstens einen oder jedes Rohrs kleiner als die Hälfte oder als ein Drittel der axialen Länge des Hauptabschnitts des wenigstens einen oder des jeweiligen Rohrs. Vorzugsweise ist der Innendurchmesser des Endabschnitts des wenigstens einen oder jedes Rohrs größer oder gleich dem Außendurchmesser des Hauptabschnitts des wenigstens einen oder des jeweiligen Rohrs. Vorteilhaft ist der Außendurchmesser des Endabschnitts des wenigstens einen oder jedes Rohrs größer oder gleich dem Außendurchmesser des Hauptabschnitts des wenigstens einen oder des jeweiligen Rohrs. Bevorzugt ist die Wandstärke des Endabschnitts des wenigstens einen oder jedes Rohrs kleiner oder gleich der Wandstärke des Hauptabschnitts des wenigstens einen oder des jeweiligen Rohrs.

Gemäß einer Weiterbildung weist das wenigstens eine oder jedes Rohr in seinem Endabschnitt oder in einem seinem Endabschnitt zugewandten Endbereich seines Hauptabschnitts oder im Bereich des Übergangs zwischen seinem Hauptabschnitt und seinem Endabschnitt am Außenumfang einen sich quer zur axialen Richtung erstreckenden, ringförmigen Vorsprung auf, der insbesondere als erster ringförmiger Vorsprung bezeichnet wird. Bevorzugt steht der erste ringförmige Vorsprung des wenigstens einen oder jedes Rohrs quer zur axialen Richtung von dem wenigstens einen oder dem jeweiligen Rohr vor. Vorzugsweise steht der erste ringförmige Vorsprung des wenigstens einen oder jedes Rohrs quer zur axialen Richtung von dem Hauptabschnitt und/oder von dem Endabschnitt des wenigstens einen oder des jeweiligen Rohrs vor. Vorteilhaft liegt die dem Hauptabschnitt abgewandte und/oder dem Endabschnitt zugewandte Seite des ersten ringförmigen Vorsprungs des wenigstens einen oder jedes Rohrs auf gleicher axialer Höhe wie die ringförmige Anlagefläche des wenigstens einen oder des jeweiligen Rohrs. Bevorzugt ist der erste ringförmige Vorsprung, insbesondere zumindest teilweise, in den Elastomerkörper eingebettet und/oder von diesem umschlossen. Der erste ringförmige Vorsprung dient insbesondere zur Fadenpaketführung.

Bevorzugt ist der erste ringförmige Vorsprung des wenigstens einen oder jedes Rohrs integral mit den Rohrabschnitten und/oder mit dem Endabschnitt und/oder mit dem Hauptabschnitt des wenigstens einen oder des jeweiligen Rohrs ausgebildet. Alternativ ist der erste ringförmige Vorsprung des wenigstens einen oder jedes Rohrs z.B. durch ein separates Bauteil gebildet. Beispielsweise ist der erste ringförmige Vorsprung des wenigstens einen oder jedes Rohrs formschlüssig und/oder reibschlüssig an dem Hauptabschnitt und/oder an dem Endabschnitt des wenigstens einen oder des jeweiligen Rohrs festgelegt.

Der erste ringförmige Vorsprung des wenigstens einen oder jedes Rohrs ist z.B. durch eine oder jeweils eine, insbesondere ein separates Bauteil bildende, Ringscheibe gebildet. Vorzugsweise ist der erste ringförmige Vorsprung und/oder diese Ringscheibe spiegelsymmetrisch zu einer quer zur axialen Richtung verlaufenen Spiegelebene ausgebildet. Somit ist der erste ringförmige Vorsprung und/oder diese Ringscheibe des wenigstens einen oder jedes Rohrs z.B. montierbar, ohne auf die Lage oder Ausrichtung des ersten ringförmigen Vorsprungs und/oder der, insbesondere zugehörigen, Ringscheibe achten zu müssen. Alternativ ist der erste ringförmige Vorsprung des wenigstens einen oder jedes Rohrs z.B. an einer oder an einem axialen Ende einer auf den Hauptabschnitt und/oder den Endabschnitt des wenigstens einen oder des jeweiligen Rohrs aufgeschobenen Hülse vorgesehen, die insbesondere reibschlüssig und/oder stoffschlüssig an dem Hauptabschnitt und/oder dem Endabschnitt des wenigstens einen oder des jeweiligen Rohrs festgelegt ist.

Gemäß einer Ausgestaltung weist das wenigstens eine oder jedes Rohr in einem seinem Endabschnitt abgewandten axialen Endbereich, insbesondere seines Hauptabschnitts, am Außenumfang einen sich quer zur axialen Richtung erstreckenden, zweiten ringförmigen Vorsprung auf. Insbesondere ist der zweite ringförmige Vorsprung des wenigstens einen oder jedes Rohrs am Hauptabschnitt des oder des jeweiligen Rohrs vorgesehen. Bevorzugt bildet ein dem Endabschnitt des wenigstens einen oder jedes Rohrs abgewandter axialer Endbereich des Hauptabschnitts des wenigstens einen oder des jeweiligen Rohrs den oder einen axialen Endbereich des wenigstens einen oder des jeweiligen Rohrs. Bevorzugt ist der zweite ringförmige Vorsprung, insbesondere zumindest teilweise, in den Elastomerkörper eingebettet und/oder von diesem umschlossen. Der zweite ringförmige Vorsprung dient insbesondere zur Fadenpaketführung.

Bevorzugt ist oder bildet der zweite ringförmige Vorsprung des wenigstens einen oder jedes Rohrs ein separates Bauteil. Bevorzugt steht der zweite ringförmige Vorsprung des wenigstens einen oder jedes Rohrs quer zur axialen Richtung von dem wenigstens einen oder von dem jeweiligen Rohr vor. Vorzugsweise steht der zweite ringförmige Vorsprung des wenigstens einen oder jedes Rohrs quer zur axialen Richtung von dem Hauptabschnitt und/oder von dem axialen Endbereich des wenigstens einen oder des jeweiligen Rohrs vor. Vorteilhaft ist der zweite ringförmige Vorsprung des wenigstens einen oder jedes Rohrs formschlüssig und/oder reibschlüssig an dem Hauptabschnitt des wenigstens einen oder des jeweiligen Rohrs festgelegt.

Der zweite ringförmige Vorsprung des wenigstens einen oder jedes Rohrs ist bevorzugt durch eine oder jeweils eine, insbesondere ein separates Bauteil bildende, Ringscheibe gebildet. Vorzugsweise ist der zweite ringförmige Vorsprung und/oder diese Ringscheibe spiegelsymmetrisch zu einer quer zur axialen Richtung verlaufenen Spiegelebene ausgebildet. Somit ist der zweite ringförmige Vorsprung und/oder diese Ringscheibe des wenigstens einen oder jedes Rohrs z.B. montierbar, ohne auf die Lage oder Ausrichtung des zweiten ringförmigen Vorsprungs und/oder der, insbesondere zugehörigen, Ringscheibe achten zu müssen. Alternativ ist der zweite ringförmige Vorsprung des wenigstens einen oder jedes Rohrs z.B. an einer oder an einem axialen Ende einer auf den Hauptabschnitt des wenigstens einen oder des jeweiligen Rohrs aufgeschobenen Hülse vorgesehen, die insbesondere reibschlüssig und/oder stoffschlüssig an dem Hauptabschnitt des wenigstens einen oder des jeweiligen Rohrs festgelegt ist. Die die ringförmigen Vorsprünge bildenden Ringscheiben sind vorzugsweise gleich ausgebildet.

Bevorzugt sind die Rohre gleich oder gleichartig ausgebildet. Somit kann insbesondere der Aufwand zur Herstellung der Rohre und/oder zur Montage der elastischen Kupplung verringert werden.

Bevorzugt sind wenigstens zwei oder mehrere der Rohre in axialer Richtung unterschiedlich und/oder einander entgegengesetzt orientiert und/oder ausgerichtet. Vorzugsweise sind zwei in Umfangsrichtung benachbarte der Rohre in axialer Richtung unterschiedlich und/oder einander entgegengesetzt orientiert und/oder ausgerichtet. Somit können z.B. axiale Flanschvorsprünge von Flanschen oder Wellenflanschen auf beiden Seiten der elastischen Kupplung in die Endabschnitte der Rohre eintauchen.

Gemäß einer Weiterbildung beträgt die Anzahl der Rohre zwei oder wenigstens zwei oder vier oder wenigstens vier oder sechs oder wenigstens sechs. Insbesondere ist die Anzahl der Rohre eine gerade Zahl. Bevorzugt sind die Rohre rings der Kupplungsmittelachse gleichmäßig verteilt angeordnet.

Gemäß einer Ausgestaltung ist der Hauptabschnitt des wenigstens einen oder jedes Rohrs frei von einem Gewinde oder Innengewinde. Alternativ ist der Hauptabschnitt des wenigstens einen oder jedes Rohrs mit einem Innengewinde versehen. In diesem Fall ist in den Hauptabschnitt des wenigstens einen oder jedes Rohrs z.B. ein oder jeweils ein Gewindebolzen oder eine oder jeweils eine Schraube eingeschraubt oder einschraubbar. Vorteilhaft ist der Endabschnitt des wenigstens einen oder jedes Rohrs frei von einem Gewinde oder Innengewinde.

Gemäß einer Weiterbildung umfasst das wenigstens eine Fadenpakt mehrere zentrale Fadenpakete und mehrere äußere Fadenpakete. Bevorzugt umschlingt jedes Fadenpaket zwei benachbarte der Rohre. Vorzugsweise sind die Rohre zu Rohrpaaren zusammengefasst, die in Umfangsrichtung hintereinander angeordnet sind und jeweils zwei benachbarte der Rohre umfassen. Vorteilhaft sind die Rohre jedes Rohrpaars durch eines der zentralen Fadenpakete umschlungen. Bevorzugt sind benachbarte Rohre von benachbarten Rohrpaaren durch zwei äußere Fadenpakete umschlugen. Insbesondere ist an jedem Rohr eines der zentralen Fadenpakete axial zwischen zwei der äußeren Fadenpakete angeordnet, die sich vorzugsweise in einer anderen Richtung von dem Rohr wegerstrecken als das oder das jeweilige zentrale Fadenpaket.

Der Elastomerkörper ist vorzugsweise ringförmig. Alternativ ist der Elastomerkörper z.B. scheibenförmig. Der Elastomerkörper besteht bevorzugt aus einem elastischen Material. Insbesondere besteht der Elastomerkörper aus Gummi. Vorteilhaft umschließt der Elastomerkörper das wenigstens eine oder jedes Rohr, insbesondere in seinem Hauptabschnitt und/oder in seinem Endabschnitt, vorzugsweise umfangsseitig, insbesondere zumindest teilweise. Beispielsweise ist das wenigstens eine oder jedes Rohr, insbesondere in seinem Hauptabschnitt und/oder in seinem Endabschnitt, vorzugsweise umfangsseitig, insbesondere zumindest teilweise, in den Elastomerkörper eingebettet.

Die elastische Kupplung bildet insbesondere eine fadenarmierte elastische Kupplung. Beispielsweise wird die elastische Kupplung auch als Gelenkscheibe oder als Antriebsgelenkscheibe bezeichnet. Insbesondere ist die elastische Kupplung nicht schaltbar.

Die elastische Kupplung ist insbesondere in axialer Richtung zwischen den Wellenflanschen angeordnet. Die Befestigungsmittel sind oder umfassen z.B. Befestigungsbolzen und/oder Befestigungsschrauben. Bevorzugt sind die Befestigungsmittel in den Rohren angeordnet, ohne dass zusätzliche Rohre in den Rohrinnenräumen der Rohre vorgesehen sind. Insbesondere sind die Rohrinnenräume der Rohre frei von zusätzlichen Rohren. Vorzugsweise fallen Drehachsen der Wellen, insbesondere mit der Kupplungsmittelachse, zusammen. Die Drehachsen der Wellen werden z.B. auch als Wellendrehachsen bezeichnet. Vorteilhaft erstreckt sich der oder jeder Flansch oder Wellenflansch, insbesondere bezüglich der Kupplungsmittelachse und/oder bezüglich der jeweiligen Wellendrehachse, in radialer Richtung.

Vorteilhaft liegt der wenigstens eine Flanschvorsprung stirnseitig an der Anlagefläche und/oder umfangsseitig an der Innenumfangsfläche des wenigstens einen Aufnahmeraums oder des, insbesondere zugehörigen, Endbereichs an. Bevorzugt weisen die Wellenflansche, insbesondere axiale, Flanschvorsprünge auf, die in die Aufnahmeräume oder in jeweils einen der Aufnahmeräume eingreifen. Der oder jeder Flanschvorsprung steht insbesondere axial von dem oder dem jeweiligen Flansch oder Wellenflansch vor. Vorteilhaft liegen die Flanschvorsprünge stirnseitig an den Anlageflächen und/oder umfangsseitig an den Innenumfangsflächen der Aufnahmeräume oder der, insbesondere zugehörigen, Endbereiche an. Bevorzugt ist in dem wenigstens einen oder in jedem Flanschvorsprung ein Loch vorgesehen, in oder durch welches sich eines der Befestigungsmittel hinein oder hindurch erstreckt. Beispielsweise ist in dem Loch des wenigstens einen oder jedes Flanschvorsprungs ein Innengwinde vorgesehen, in welches insbesondere das jeweilige Befestigungsmittel eingeschraubt oder einschraubbar ist.

Bevorzugt weist der oder jeder Flansch mehrere, insbesondere drei Flanscharme auf, die rings einer Flanschmittelachse, vorzugsweise gleichmäßig verteilt, angeordnet sind. Alternativ ist der oder jeder Flansch z.B. scheibenförmig. Die Flanschmittelachse des oder jedes Flansches erstreckt sich insbesondere in axialer Richtung und/oder fällt z.B. mit der Kupplungsmittelachse zusammen.

Die Erfindung wird nachfolgend anhand einer bevorzugten Ausführungsform unter Bezugnahme auf die Zeichnung beschrieben. In der Zeichnung zeigen:
Fig. 1 eine perspektivische Ansicht einer elastischen Kupplung gemäß einer Ausführungsform,
Fig. 2 eine Draufsicht auf die elastische Kupplung,
Fig. 3 eine perspektivische und teilweise von einem Elastomerkörper freigelegte Ansicht der elastischen Kupplung,
Fig. 4 eine Schnittansicht der elastischen Kupplung entlang der aus Fig. 2 ersichtlichen Schnittlinie A-A,
Fig. 5 eine Schnittansicht eines aus Fig. 4 ersichtlichen Rohrs,
Fig. 6 eine Draufsicht auf das Rohr nach Fig. 5,
Fig. 7 eine Schnittansicht einer ersten Variante des aus Fig. 5 ersichtlichen Rohrs,
Fig. 8 eine Draufsicht auf eine zweite Variante des aus Fig. 5 ersichtlichen Rohrs,
Fig. 9 eine Schnittansicht einer Wellenverbindung mit einer elastischen Kupplung,
Fig. 10 eine Schnittansicht einer ersten Abwandlung der Wellenverbindung und
Fig. 11 eine Schnittansicht einer zweiten Abwandlung der Wellenverbindung.

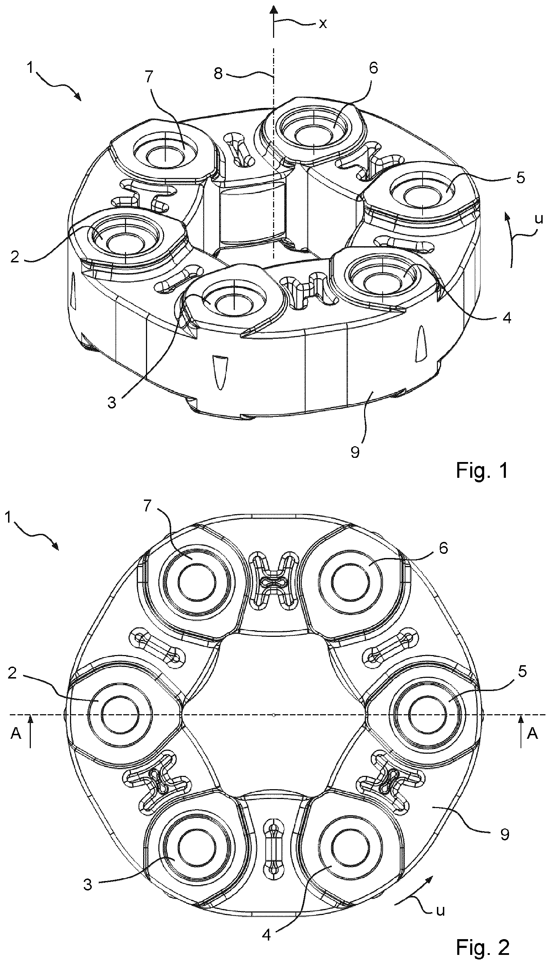

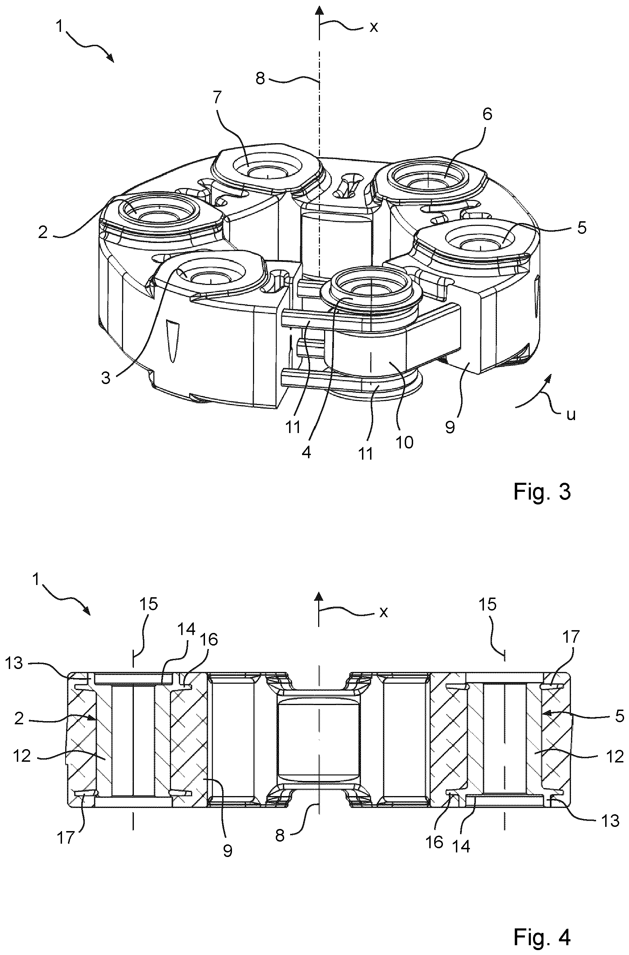

Aus den Fig. 1 bis 4 sind unterschiedliche Ansichten und Teilansichten einer elastischen Kupplung 1 gemäß einer Ausführungsform ersichtlich. Die elastische Kupplung 1 weist mehrere, sich jeweils in einer axialen Richtung x erstreckende Rohre 2, 3, 4, 5, 6 und 7, die rings einer in axialer Richtung x verlaufenden Kupplungsmittelachse 8 im Abstand zueinander angeordnet sind, und einen die Rohre umfangsseitig umschließenden Elastomerkörper 9 auf.

Die Rohre sind zu Rohrpaaren zusammengefasst, die in Umfangsrichtung u der Kupplung 1 hintereinander angeordnet sind und jeweils zwei benachbarte der Rohre umfassen. Ein erstes der Rohrpaare umfasst die Rohre 2 und 3, ein zweites der Rohrpaare umfasst die Rohre 4 und 5, und ein drittes der Rohrpaare umfasst die Rohre 6 und 7. Jedem Rohrpaar ist ein zentrales Fadenpaket 10 zugeordnet, wobei die Rohre jedes Rohrpaars von dem jeweils zugeordneten zentralen Fadenpaket 10 umschlungen sind. Ferner sind die benachbarten Rohre von benachbarten Rohrpaaren durch zwei äußere Fadenpakete 11 umschlungen. An jedem Rohr ist somit eines der zentralen Fadenpakete 10 axial zwischen zwei der äußeren Fadenpakete 11 angeordnet, die sich insbesondere in einer anderen Richtung von dem oder dem jeweiligen Rohr wegerstrecken als das zentrale Fadenpaket 10. Die Fadenpakete 10 und 11 sind in den Elastomerkörper 9 eingebettet.

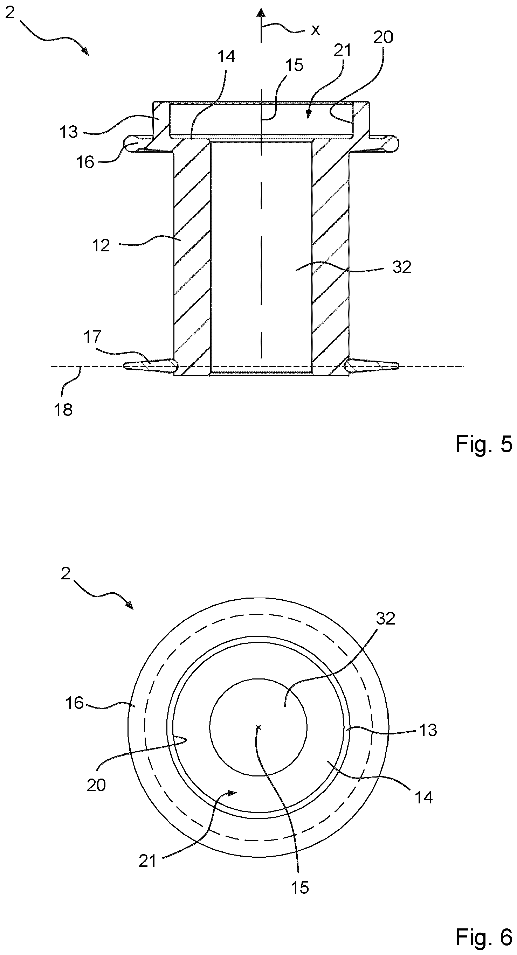

Die Rohre sind gleich ausgebildet, wobei jedes Rohr zwei in axialer Richtung x aufeinander folgende Rohrabschnitte aufweist, von denen einer einen Hauptabschnitt 12 und ein anderer einen integral mit diesem ausgebildeten Endabschnitt 13 bildet, der einen größeren Innendurchmesser als der Hauptabschnitt 12 aufweist, dessen dem Endabschnitt 13 zugewandte Stirnseite eine quer zur axialen Richtung x ausgerichtete, ringförmige Anlagefläche 14 bildet. Ein Längsschnitt durch das Rohr 2 ist in Fig. 5 gezeigt. Ferner zeigt Fig. 6 eine Draufsicht auf das Rohr 2.

Die Anlagefläche 14 jedes Rohrs definiert zusammen mit einer Innenumfangsfläche 20 des Endabschnitts 13 des jeweiligen Rohrs einen, vorzugsweise zylindrischen, Aufnahmeraum 21, der z.B. auch als Passungsbereich bezeichnet wird. Jeder Aufnahmeraum 21 bildet insbesondere einen Rohrinnenraum des jeweiligen Endabschnitts 13. Ein Rohrinnenraum des Hauptabschnitts 12 jedes Rohrs wird insbesondere mit dem Bezugszeichen 32 bezeichnet.

Die axiale Länge des Endabschnitts 13 jedes Rohrs ist kleiner als die axiale Länge des Hauptabschnitts 12 des jeweiligen Rohrs. Ferner ist der Innendurchmesser des Endabschnitts 13 jedes Rohrs insbesondere größer oder gleich dem Außendurchmesser des Hauptabschnitts 12 des jeweiligen Rohrs.

Jedem Rohr ist eine in axialer Richtung x verlaufende Rohrlängsachse 15 zugeordnet. Ferner ist jedes Rohr bezüglich seiner Rohrlängsachse 15 rotationssymmetrisch ausgebildet.

Jedes Rohr weist im Bereich des Übergangs zwischen seinem Hauptabschnitt 12 und seinem Endabschnitt 13 am Außenumfang einen sich quer zur axialen Richtung x erstreckenden, ersten ringförmigen Vorsprung 16 auf, der integral mit den Rohrabschnitten 12 und 13 des jeweiligen Rohrs ausgebildet ist.

Ferner weist jedes Rohr in einem seinem Endabschnitt 13 abgewandten axialen Endbereich am Außenumfang einen sich quer zur axialen Richtung x erstreckenden, zweiten ringförmigen Vorsprung 17 auf, der durch eine Ringscheibe gebildet und formschlüssig an dem Hauptabschnitt 12 des jeweiligen Rohrs festgelegt ist. Dieser Formschluss wird beispielsweise durch Verstemmen erzielt. Die Ringscheibe ist spiegelsymmetrisch zu einer quer zur axialen Richtung x verlaufenen Spiegelebene 18 ausgebildet.

Die Rohre sind zwar gleich ausgebildet, allerdings sind zwei in Umfangsrichtung benachbarte Rohre in axialer Richtung x unterschiedlich orientiert. Somit sind die Rohre 2 und 3 in axialer Richtung x unterschiedlich orientiert. Ferner sind die Rohre 3 und 4 in axialer Richtung x unterschiedlich orientiert. Auch sind die Rohre 4 und 5 in axialer Richtung x unterschiedlich orientiert. Zudem sind die Rohre 5 und 6 in axialer Richtung x unterschiedlich orientiert. Auch sind die Rohre 6 und 7 in axialer Richtung x unterschiedlich orientiert. Schließlich sind die Rohre 7 und 2 in axialer Richtung x unterschiedlich orientiert. Die Rohre 2, 4 und 6 sind in axialer Richtung x allerdings gleich orientiert. Ferner sind die Rohre 3, 5 und 7 in axialer Richtung x gleich orientiert.

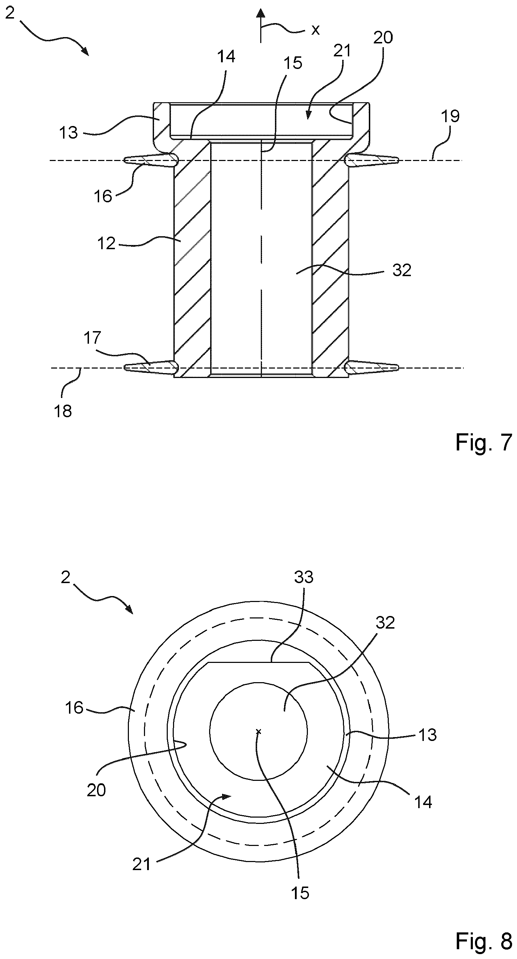

Aus Fig. 7 ist eine Schnittansicht einer ersten Variante eines Rohrs 2 ersichtlich, wobei identische oder ähnliche Merkmale mit denselben Bezugszeichen wie in Fig. 5 bezeichnet sind. Im Unterschied zu dem Rohr aus Fig. 5 ist der erste ringförmige Vorsprung 16 durch eine Ringscheibe gebildet, die in einem dem Endabschnitt 13 zugewandten Endbereich des Hauptabschnitts 12 angeordnet und formschlüssig an dem Hauptabschnitt 12 festgelegt ist. Dieser Formschluss wird beispielsweise durch Verstemmen erzielt. Die den ersten ringförmigen Vorsprung 16 bildende Ringscheibe ist spiegelsymmetrisch zu einer quer zur axialen Richtung x verlaufenen Spiegelebene 19 ausgebildet. Anstelle der in den Fig. 1 bis 6 verwendeten Rohre können z.B. auch Rohre gemäß der aus Fig. 7 ersichtlichen ersten Variante verwendet werden. Die die ringförmigen Vorsprünge 16 und 17 bildenden Ringscheiben sind vorzugsweise gleich ausgebildet.

Aus Fig. 8 ist eine Draufsicht auf das Rohr 2 gemäß einer zweiten Variante ersichtlich, wobei identische oder ähnliche Merkmale mit denselben Bezugszeichen wie in Fig. 6 bezeichnet sind. Im Unterschied zu Fig. 6 ist die Innenumfangsfläche 20 des Endabschnitts nicht rund, sondern unrund, sodass insbesondere eine Verdrehsicherung geschaffen ist. Gemäß der zweiten Variante weist die Innenumfangsfläche 20 einen Mitnehmer 33 in Form eines geraden Abschnitts auf. Alternativ kann die Innenumfangsfläche 20, insbesondere in Umfangsrichtung des Rohrs, auch mehrere gerade Abschnitte oder mehrere Zähne oder keilförmige Abschnitte als Mitnehmer aufweisen. Anstelle der in den Fig. 1 bis 6 verwendeten Rohre können z.B. auch Rohre gemäß der aus Fig. 8 ersichtlichen zweiten Variante verwendet werden. Ferner ist es möglich, die erste Variante gemäß Fig. 7 mit der zweiten Variante gemäß Fig. 8 zu kombinieren.

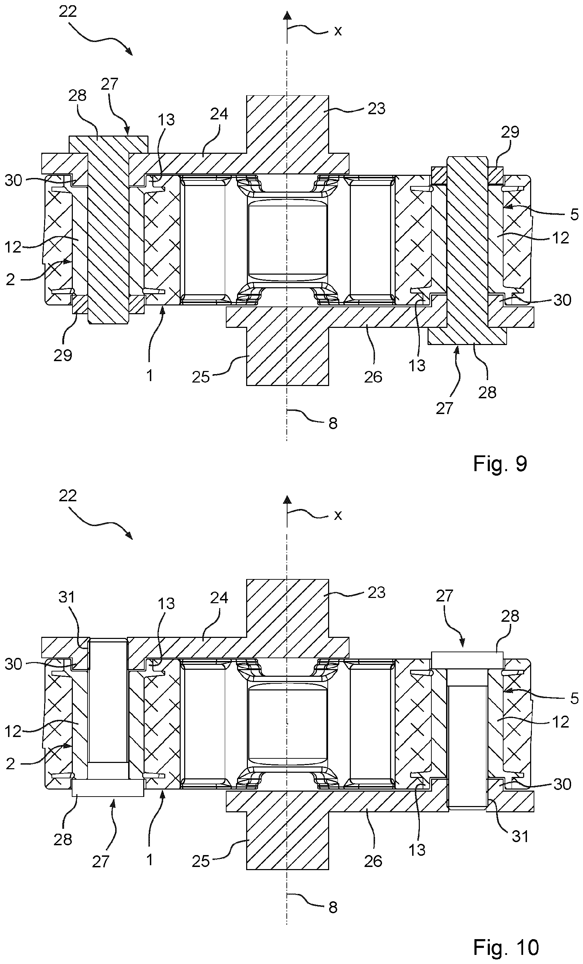

Fig. 9 zeigt eine Wellenverbindung 22 mit einer ersten Welle 23, die an einem Ende einen ersten Wellenflansch 24 aufweist, und einer zweiten Welle 25, die an einem dem ersten Wellenflansch 24 zugewandten Ende einen zweiten Wellenflansch 26 aufweist, wobei eine elastische Kupplung 1 axial zwischen den Wellenflanschen 24 und 26 angeordnet ist, die jeweils mit der elastischen Kupplung 1 durch Befestigungsmittel 27 verbunden sind. Die Befestigungsmittel umfassen z.B. Schrauben 28 und auf diese aufgeschraubte Muttern 29. Beispielsweise ist jeder Wellenflansch zusammen mit der elastischen Kupplung 1 zwischen Schraubenköpfen mehrerer Schrauben 28 und auf diese aufgeschraubte Muttern 29 angeordnet. Die Wellenflansche 24 und 26 weisen axiale Flanschvorsprünge 30 auf, die jeweils in einen der Aufnahmeräume 21 eingreifen. Bevorzugt liegen die Flanschvorsprünge 30 dabei stirnseitig an den Anlageflächen 14 und/oder umfangsseitig an den Innenumfangsflächen 20 an. Bei der elastischen Kupplung 1 handelt es sich insbesondere um die zuvor beschriebene elastische Kupplung.

Fig. 10 zeigt eine erste Abwandlung einer Wellenverbindung 22 mit einer ersten Welle 23, die an einem Ende einen ersten Wellenflansch 24 aufweist, und einer zweiten Welle 25, die an einem dem ersten Wellenflansch 24 zugewandten Ende einen zweiten Wellenflansch 26 aufweist, wobei eine elastische Kupplung 1 axial zwischen den Wellenflanschen 24 und 26 angeordnet ist, die jeweils mit der elastischen Kupplung 1 durch Befestigungsmittel 27 verbunden sind. Die Befestigungsmittel umfassen z.B. Schrauben 28, die in in den Wellenflanschen vorgesehenen Innengewinden 31 eingeschraubt sind. Beispielsweise ist die elastische Kupplung 1 zwischen jedem Wellenflansch und Schraubenköpfen von in diesen eingeschraubten Schrauben 28 angeordnet. Die Wellenflansche 24 und 26 weisen axiale Flanschvorsprünge 30 auf, die jeweils in einen der Aufnahmeräume 21 eingreifen. Bevorzugt liegen die Flanschvorsprünge 30 dabei stirnseitig an den Anlageflächen 14 und/oder umfangsseitig an den Innenumfangsflächen 20 an. Die Innengewinde 31 sind vorzugsweise in den Flanschvorsprüngen der Wellenflansche vorgesehen. Bei der elastischen Kupplung 1 handelt es sich insbesondere um die zuvor beschriebene elastische Kupplung.

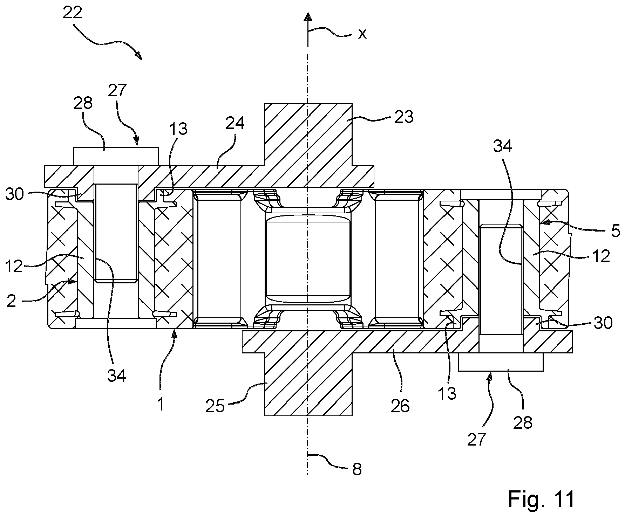

Fig. 11 zeigt eine zweite Abwandlung einer Wellenverbindung 22 mit einer ersten Welle 23, die an einem Ende einen ersten Wellenflansch 24 aufweist, und einer zweiten Welle 25, die an einem dem ersten Wellenflansch 24 zugewandten Ende einen zweiten Wellenflansch 26 aufweist, wobei eine elastische Kupplung 1 axial zwischen den Wellenflanschen 24 und 26 angeordnet ist, die jeweils mit der elastischen Kupplung 1 durch Befestigungsmittel 27 verbunden sind. Die Befestigungsmittel umfassen z.B. Schrauben 28, die jeweils in ein in dem jeweiligen Hauptabschnitt 12 vorgesehenes Innengewinde 34 eingeschraubt sind. Beispielsweise ist jeder Wellenflansch zwischen Schraubenköpfen mehrerer Schrauben 28 und der elastischen Kupplung 1 angeordnet. Die Wellenflansche 24 und 26 weisen axiale Flanschvorsprünge 30 auf, die jeweils in einen der Aufnahmeräume 21 eingreifen. Bevorzugt liegen die Flanschvorsprünge 30 dabei stirnseitig an den Anlageflächen 14 und/oder umfangsseitig an den Innenumfangsflächen 20 an. Bei der elastischen Kupplung 1 handelt es sich insbesondere um die zuvor beschriebene elastische Kupplung, wobei in den Hauptabschnitten 12 allerdings die Innengewinde 34 vorgesehen sind.

### Bezugszeichenliste

- 1: elastische Kupplung
- 2: Rohr
- 3: Rohr
- 4: Rohr
- 5: Rohr
- 6: Rohr
- 7: Rohr
- 8: Kupplungsmittelachse
- 9: Elastomerkörper
- 10: zentrales Fadenpaket
- 11: äußeres Fadenpaket
- 12: Hauptabschnitt
- 13: Endabschnitt
- 14: Anlagefläche
- 15: Rohrlängsachse
- 16: erster ringförmiger Vorsprung
- 17: zweiter ringförmiger Vorsprung
- 18: Spiegelebene
- 19: Spiegelebene
- 20: Innenumfangsfläche des Endabschnitts
- 21: Aufnahmeraum
- 22: Wellenverbindung
- 23: erste Welle
- 24: erster Wellenflansch
- 25: zweite Welle
- 26: zweiter Wellenflansch
- 27: Befestigungsmittel
- 28: Schraube
- 29: Mutter
- 30: Flanschvorsprung
- 31: Innengewinde
- 32: Rohrinnenraum
- 33: Mitnehmer
- 34: Innengewinde

- u: Umfangsrichtung der Kupplung
- x: axiale Richtung

## Patentansprüche

1. Wellenverbindung mit einer ersten Welle (23), die an einem Ende einen ersten Wellenflansch (24) aufweist, einer zweiten Welle (25), die an einem dem ersten Wellenflansch (24) zugewandten Ende einen zweiten Wellenflansch (26) aufweist, und einer zwischen den Wellenflanschen (24, 26) angeordneten elastischen Kupplung (1), mit welcher die Wellenflansche (24, 26) fest verbunden sind, wobei die elastische Kupplung (1) mehrere, sich jeweils in einer axialen Richtung (x) erstreckende Rohre (2, 3, 4, 5, 6, 7), die rings einer in axialer Richtung (x) verlaufenden Kupplungsmittelachse (8) im Abstand zueinander angeordnet sind, wenigstens ein Fadenpaket (10, 11), mittels welchem die Rohre miteinander gekoppelt sind, und wenigstens einen die Rohre umfangsseitig umschließenden Elastomerkörper (9) aufweist, in den das wenigstens eine Fadenpaket (10, 11) eingebettet ist, wobei wenigstens eines oder jedes der Rohre zwei in axialer Richtung (x) aufeinander folgende Rohrabschnitte aufweist, von denen einer einen Hauptabschnitt (12) und ein anderer einen integral mit diesem ausgebildeten Endabschnitt (13) bildet, der einen größeren Innendurchmesser als der Hauptabschnitt (12) aufweist, dessen dem Endabschnitt (13) zugewandte Stirnseite eine quer zur axialen Richtung (x) ausgerichtete, ringförmige Anlagefläche (14) bildet, wobei durch die Anlagefläche (14) des wenigstens einen oder jedes Rohrs zusammen mit einer Innenumfangsfläche (20) des Endabschnitts (13) des wenigstens einen oder des jeweiligen Rohrs ein oder jeweils ein innerhalb des Elastomerkörpers (9) liegender Aufnahmeraum (21) definiert ist, **dadurch gekennzeichnet, dass** wenigstens einer der Wellenflansche (24, 25) wenigstens einen axialen Flanschvorsprung (30) aufweist, der in den wenigstens einen Aufnahmeraum (21) oder in wenigstens einen der Aufnahmeräume (21) eingreift.

2. Wellenverbindung nach Anspruch 1, **dadurch gekennzeichnet, dass** die Wellenflansche (24, 25) mit der elastischen Kupplung (1) durch Befestigungsmittel (27) fest verbunden sind.

3. Wellenverbindung nach Anspruch 2, **dadurch gekennzeichnet, dass** in dem wenigstens einen Flanschvorsprung (30) ein Loch vorgesehen ist, in oder durch welches sich eines der Befestigungsmittel (27) hinein oder hindurch erstreckt.

4. Wellenverbindung nach einem der vorangehenden Ansprüche, **dadurch gekennzeichnet, dass** die axiale Länge des Endabschnitts (13) des wenigstens einen oder jedes Rohrs kleiner als die axiale Länge des Hauptabschnitts (12) des wenigstens einen oder des jeweiligen Rohrs ist.

5. Wellenverbindung nach einem der vorangehenden Ansprüche, **dadurch gekennzeichnet, dass** der Innendurchmesser des Endabschnitts (13) des wenigstens einen oder jedes Rohrs größer oder gleich dem Außendurchmesser des Hauptabschnitts (12) des wenigstens einen oder des jeweiligen Rohrs ist.

6. Wellenverbindung nach einem der vorangehenden Ansprüche, **dadurch gekennzeichnet, dass** das wenigstens eine oder jedes Rohr in seinem Endabschnitt (13) oder in einem seinem Endabschnitt (13) zugewandten Endbereich seines Hauptabschnitts (12) oder im Bereich des Übergangs zwischen seinem Hauptabschnitt (12) und seinem Endabschnitt (13) am Außenumfang einen sich quer zur axialen Richtung (x) erstreckenden, ringförmigen Vorsprung (16) aufweist.

7. Wellenverbindung nach Anspruch 6, **dadurch gekennzeichnet, dass** der ringförmige Vorsprung (16) des wenigstens einen oder jedes Rohrs integral mit den Rohrabschnitten (12, 13) des wenigstens einen oder des jeweiligen Rohrs ausgebildet ist.

8. Wellenverbindung nach Anspruch 6 oder 7, **dadurch gekennzeichnet, dass** das wenigstens eine oder jedes Rohr in einem seinem Endabschnitt (13) abgewandten axialen Endbereich am Außenumfang einen sich quer zur axialen Richtung (x) erstreckenden, zweiten ringförmigen Vorsprung (17) aufweist.

9. Wellenverbindung nach Anspruch 8, **dadurch gekennzeichnet, dass** der zweite ringförmige Vorsprung (17) des wenigstens einen oder jedes Rohrs formschlüssig oder reibschlüssig an dem Hauptabschnitt (12) des wenigstens einen oder des jeweiligen Rohrs festgelegt ist.

10. Wellenverbindung nach Anspruch 9, **dadurch gekennzeichnet, dass** der zweite ringförmige Vorsprung (17) des wenigstens einen Rohrs durch eine Ringscheibe gebildet ist, die spiegelsymmetrisch zu einer quer zur axialen Richtung (x) verlaufenen Spiegelebene (18) ausgebildet ist.

11. Wellenverbindung nach einem der vorangehenden Ansprüche, **dadurch gekennzeichnet, dass** die Rohre (2, 3, 4, 5, 6, 7) gleich ausgebildet sind.

12. Wellenverbindung nach einem der vorangehenden Ansprüche, **dadurch gekennzeichnet, dass** zwei in Umfangsrichtung (u) benachbarte der Rohre in axialer Richtung (x) unterschiedlich orientiert sind.

## Claims

1. Shaft connection having a first shaft (23), which has a first shaft flange (24) at one end, a second shaft (25), which has a second shaft flange (26) at an end facing the first shaft flange (24), and a flexible coupling (1) arranged between the shaft flanges (24, 26), with which the shaft flanges (24, 26) are firmly connected, wherein the flexible coupling (1) comprises a plurality of pipes (2, 3, 4, 5, 6, 7) extending in an axial direction (x) which are arranged around a coupling centre axis (8) running in an axial direction (x) at a distance from one another, at least one thread package (10, 11) by means of which the pipes are coupled to one another and at least one elastomer body (9) surrounding the pipe on the circumference in which the at least one thread package (10, 11) is embedded, wherein at least one or each of the pipes has two pipe sections following one after the other in the axial direction (x), one of which forms a main section (12) and another an end section (13) formed integrally with this, which has a larger inner diameter than the main section (12), the end face of which facing the end section (13) forms an annular contact surface (14) aligned transverse to the axial direction (x), wherein, by means of the contact surface (14) of the at least one or each pipe together with an inner circumferential surface (20) of the end section (13) of the at least one or the respective pipe, a or in each case a recess space (21) lying within the elastomer body (9) is defined, **characterised in that** at least one of the shaft flanges (24, 25) has at least one axial flange projection (30) which engages in the at least one recess space (21) or in at least one of the recess spaces (21).

2. Shaft connection according to claim 1, **characterised in that** the shaft flanges (24, 25) are firmly connected to the elastic coupling (1) by means of fastening means (27).

3. Shaft connection according to claim 2, **characterised in that** a hole is provided in the at least one flange projection (30) through which one of the fastening means (27) extends into or through.

4. Shaft connection according to any one of the preceding claims, **characterised in that** the axial length of the end section (13) of the at least one or each pipe is less than the axial length of the main section (12) of the at least one or the respective pipe.

5. Shaft connection according to any one of the preceding claims, **characterised in that** the inner diameter of the end section (13) of the at least one or each pipe is greater than or equal to the outer diameter of the main section (12) of the at least one or the respective pipe.

6. Shaft connection according to any one of the preceding claims, **characterised in that** the end section (13) or an end region of the main section (12) facing the end section (13) or the region of the transition between the main section (12) and the end section (13), the at least one or each pipe has an annular projection (16) extending transverse to the axial direction (x) on the outer circumference.

7. Shaft connection according to claim 6, **characterised in that** the annular projection (16) of the at least one or each pipe is formed integrally with the pipe sections (12, 13) of the at least one or the respective pipe.

8. Shaft connection according to claim 6 or 7, **characterised in that** an axial end region on the outer circumference facing away from the end section (13) of the at least one or each pipe has a second annular projection (17) extending transverse to the axial direction (x) on the outer circumference.

9. Shaft connection according to claim 8, **characterised in that** the second annular projection (17) of the at least one or each pipe is determined to be positive-locking or frictionally connected to the main section (12) of the at least one or the respective pipe.

10. Shaft connection according to claim 9, **characterised in that** the second annular projection (17) of the at least one pipe is formed by a ring disc, which is formed as a mirror image of a mirror plane (18) running transverse to the axial direction (x).

11. Shaft connection according to any one of the preceding claims, **characterised in that** the pipes (2, 3, 4, 5, 6, 7) are designed identically.

12. Shaft connection according to any one of the preceding claims, **characterised in that** two of the pipes adjacent to one another in the circumferential direction (u) qare oriented differently in the axial direction (x).

## Revendications

1. Liaison d'arbre avec un premier arbre (23) qui présente à une extrémité une première bride d'arbre (24), un deuxième arbre (25) qui présente à une extrémité tournée vers la première bride d'arbre (24) une deuxième bride d'arbre (26), et un accouplement élastique (1) disposé entre les brides d'arbre (24, 26), avec lequel les brides d'arbre (24, 26) sont reliées fixement, dans laquelle l'accouplement élastique (1) comprend plusieurs tubes (2, 3, 4, 5, 6, 7) s'étendant respectivement dans une direction axiale (x), qui sont disposés à distance les uns des autres autour d'un axe central d'accouplement (8) s'étendant dans la direction axiale (x), au moins un paquet de fils (10, 11) au moyen duquel les tubes sont accouplés les uns aux autres, et au moins un corps élastomère (9) entourant les tubes côté périphérie, dans lequel le au moins un paquet de fils (10, 11) est intégré, dans laquelle au moins un ou chacun des tubes présente deux sections de tube successives dans la direction axiale (x), dont l'une forme une section principale (12) et une autre une section d'extrémité (13) réalisée d'un seul tenant avec celle-ci, qui présente un diamètre intérieur supérieur à celui de la section principale (12), dont la face frontale tournée vers la section d'extrémité (13) forme une surface d'appui (14) annulaire orientée transversalement à la direction axiale (x), dans laquelle un ou respectivement un espace de réception (21) situé à l'intérieur du corps élastomère (9) est défini par la surface d'appui (14) de l'au moins un tube ou de chaque tube conjointement avec une surface périphérique intérieure (20) de la section d'extrémité (13) de l'au moins un tube ou du tube respectif, **caractérisée en ce qu'**au moins l'une des brides d'arbre (24, 25) présente au moins une saillie de bride axiale (30) qui s'engage dans le au moins un espace de réception (21) ou dans au moins l'un des espaces de réception (21).

2. Liaison d'arbre selon la revendication 1, **caractérisée en ce que** les brides d'arbre (24, 25) sont reliées de manière fixe à l'accouplement élastique (1) par des moyens de fixation (27).

3. Liaison d'arbre selon la revendication 2, **caractérisée en ce qu'**un trou est prévu dans la au moins une saillie de bride (30), dans ou à travers lequel s'étend l'un des moyens de fixation (27).

4. Liaison d'arbre selon l'une quelconque des revendications précédentes, **caractérisée en ce que** la longueur axiale de la section d'extrémité (13) du au moins un tube ou de chaque tube est inférieure à la longueur axiale de la section principale (12) du au moins un tube ou du tube respectif.

5. Liaison d'arbre selon l'une quelconque des revendications précédentes, **caractérisée en ce que** le diamètre intérieur de la section d'extrémité (13) du au moins un tube ou de chaque tube est supérieur ou égal au diamètre extérieur de la section principale (12) du au moins un tube ou du tube respectif.

6. Liaison d'arbre selon l'une quelconque des revendications précédentes, **caractérisée en ce que** le au moins un ou chaque tube présente, dans sa section d'extrémité (13) ou dans une zone d'extrémité de sa section principale (12) tournée vers sa section d'extrémité (13) ou dans la zone de transition entre sa section principale (12) et sa section d'extrémité (13), une saillie annulaire (16) s'étendant transversalement à la direction axiale (x) sur la périphérie extérieure.

7. Liaison d'arbre selon la revendication 6, **caractérisée en ce que** la saillie annulaire (16) du au moins un tube ou de chaque tube est réalisée d'un seul tenant avec les sections de tube (12, 13) du au moins un tube ou du tube respectif.

8. Liaison d'arbre selon la revendication 6 ou 7, **caractérisée en ce que** le au moins un ou chaque tube présente, dans une zone d'extrémité axiale opposée à sa section d'extrémité (13), sur la périphérie extérieure, une deuxième saillie annulaire (17) s'étendant transversalement à la direction axiale (x).

9. Liaison d'arbre selon la revendication 8, **caractérisée en ce que** la deuxième saillie annulaire (17) du au moins un ou de chaque tube est fixée par complémentarité de formes ou par friction à la section principale (12) du au moins un ou du tube respectif.

10. Liaison d'arbre selon la revendication 9, **caractérisée en ce que** la deuxième saillie annulaire (17) du au moins un tube est formée par un disque annulaire qui est réalisée de manière symétrique par rapport à un plan de miroir (18) s'étendant transversalement à la direction axiale (x).

11. Liaison d'arbre selon l'une quelconque des revendications précédentes, **caractérisée en ce que** les tubes (2, 3, 4, 5, 6, 7) sont réalisés de manière identique.

12. Liaison d'arbre selon l'une quelconque des revendications précédentes, **caractérisée en ce que** deux des tubes voisins dans la direction périphérique (u) sont orientés différemment dans la direction axiale (x).
